(19) Europäisches Patentamt / European Patent Office / Office européen des brevets

(11) **EP 3 714 965 A1**

(12) **EUROPEAN PATENT APPLICATION**
published in accordance with Art. 153(4) EPC

(43) Date of publication:
**30.09.2020 Bulletin 2020/40**

(21) Application number: **18879463.0**

(22) Date of filing: **20.11.2018**

(51) Int Cl.:
**B01D 61/00** (2006.01)    **A23L 5/00** (2016.01)
**B01D 61/36** (2006.01)    **B01D 61/58** (2006.01)
**B01D 69/08** (2006.01)    **B01D 71/68** (2006.01)

(86) International application number:
**PCT/JP2018/042883**

(87) International publication number:
**WO 2019/098390 (23.05.2019 Gazette 2019/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.11.2017   JP 2017222557**

(71) Applicant: **Asahi Kasei Kabushiki Kaisha Tokyo 100-0006 (JP)**

(72) Inventors:
• **FUJITA, Mitsuru**
  **Tokyo 100-0006 (JP)**
• **KIGUCHI, Akira**
  **Tokyo 100-0006 (JP)**
• **MIKAWA, Masato**
  **Tokyo 100-0006 (JP)**
• **SUZUKI, Takashi**
  **Tokyo 100-0006 (JP)**

(74) Representative: **D Young & Co LLP**
  **120 Holborn**
  **London EC1N 2DY (GB)**

(54) **SYSTEM FOR CONCENTRATING SOLVENT-CONTAINING ARTICLES, AND CONCENTRATE**

(57)    This system for concentrating solvent-containing articles involves a first step in which: a supply flow (a) comprising solvent-containing articles containing a solute and a solvent (b) is caused to flow counter to or parallel with a permeant flow (d) through a forward osmosis membrane (o); the solvent (b) contained in the supply flow (a) is made to pass through the forward osmosis membrane (o) and to move into the permeant flow (d); and a concentrate flow (c) formed from the concentrated solvent-containing articles and a flow (e) formed from the diluted permeant flow (d) are obtained, wherein the permeant flow (d) is an inorganic salt solution containing multivalent cations, and the temperature of the permeant flow (d) in the aforementioned first step is 5-60°C.

FIG. 1

## Description

FIELD

The present invention relates to a system for separating and concentrating a solvent from a solvent-containing material, and to a high-quality concentrate obtained using the system.

BACKGROUND

Forward osmosis technology is a known method for separating water from water-containing materials.

PTL 1 describes a method in which a supply flow comprising seawater and a permeate flow comprising a solution of ammonia and carbon dioxide in water are allowed to flow in mutual contact through a forward osmosis membrane so that the water in the seawater permeates the forward osmosis membrane and moves into the permeate flow, and the diluted permeate flow is fed to a distillation column to obtain water while separating mixed gas containing the ammonia, carbon dioxide and water, the mixed gas being returned back to the original chamber.

PTL 2 describes a method in which a supply flow comprising seawater and a permeate flow comprising a solution of ammonia and carbon dioxide in water are allowed to flow in mutual contact through a forward osmosis membrane so that the water in the seawater permeates the forward osmosis membrane and moves into the permeate flow, with the ammonium ion and carbonate ion in the obtained diluted permeate flow being separately isolated using an ionexchange membrane or distillation column, and the separated ammonium ion and carbonate ion being redissolved in the water and returned back to the original chamber.

PTL 3 describes a method in which a supply flow and a permeate flow comprising aqueous magnesium sulfate are allowed to flow in mutual contact through a forward osmosis membrane so that the water in the supply flow permeates the forward osmosis membrane and moves into the permeate flow, a portion of the water being separated from the diluted permeate flow by pervaporation, thereby maintaining a constant concentration in the permeate flow.

[CITATION LIST]

[PATENT LITERATURE]

[PTL 1] U.S. Patent Application Publication No. 2005/0145568
[PTL 2] Japanese Unexamined Patent Publication No. 2011-83663
[PTL 3] Japanese Unexamined Patent Publication No. 2017-113675

SUMMARY

[TECHNICAL PROBLEM]

A problem with the methods of PTLs 1 and 2, however, has been that the permeating substance in the permeate flow moves into the supply flow through the forward osmosis membrane. With the method of PTL 3, only a low osmotic pressure can be applied for the permeate flow, which has been a problem because it makes it difficult for the supply flow to reach a high concentration and also generates deposits on the pervaporation film during operation, so that extended operation becomes difficult.

It is an object of the present invention to provide a system wherein, during concentration of a solvent-containing material utilizing forward osmosis, it is able to inhibit movement of the permeating substance in the permeate flow into the supply flow through the forward osmosis membrane, and which allows recovery of a high-purity concentrate while also being capable of extended operation, as well as a high-quality concentrate obtained using the system.

[SOLUTION TO PROBLEM]

The present invention has been accomplished with the aim of achieving this object.

The present inventors found that by using an inorganic aqueous solution containing a multivalent cation as the permeate flow in a concentration system based on a forward osmosis process, and controlling the temperature of the permeate flow, it is possible to inhibit movement of permeating substances from the permeate flow into the supply flow and to obtain a high-purity concentrate while allowing extended operation to be carried out, and on this basis we have devised the invention described herein.

Specifically, the present invention provides the following.

<Aspect 1> A system for concentrating a solvent-containing material which has a first step in which a supply flow (a) comprising a solvent-containing material that contains a solute and a solvent (b) is caused to flow with a permeate flow (d) by countercurrent flow or cocurrent flow through a forward osmosis membrane (o), causing the solvent (b) in the supply flow (a) to pass through the forward osmosis membrane (o) and move into the permeate flow (d), thereby obtaining a concentrated flow (c) comprising the concentrated solvent-containing material and a flow (e) comprising the diluted permeate flow (d), wherein:

the permeate flow (d) is an inorganic salt solution containing a multivalent cation, and
the temperature of the permeate flow (d) in the first step is 5 to 60°C.

<Aspect 2> The system according to aspect 1, wherein the solvent (b) is water.
<Aspect 3> The system according to aspect 1 or 2, wherein the temperature of the permeate flow (d) is 15 to 40°C.
<Aspect 4> The system according to any one of aspects 1 to 3, wherein the forward osmosis membrane (o) is in the form of a hollow fiber.
<Aspect 5> The system according to aspect 4, wherein:

the supply flow (a) is caused to flow into the hollow portion of the hollow-fiber forward osmosis membrane (o), and
the permeate flow (d) is caused to flow outside of the hollow-fiber forward osmosis membrane (o).

<Aspect 6> The system according to any one of aspects 1 to 5, wherein the permeate flow (d) is an inorganic salt solution containing a divalent cation.
<Aspect 7> The system according to any one of aspects 1 to 6, wherein the permeate flow (d) is a magnesium chloride solution.
<Aspect 8> The system according to any one of aspects 1 to 7, wherein:

the forward osmosis membrane (o) is a membrane with a support layer and a separation active layer on the support layer,
the separation active layer is a layer composed mainly of at least one type of substance selected from the group consisting of polyethersulfone, polysulfone, polyvinylidene fluoride, polyacrylonitrile and polyamide, and
the flux of the forward osmosis membrane (o) for the solvent (b) is 1 to 100 $kg/(m^2 \times hr)$.

<Aspect 9> A system for concentrating a solvent-containing material which has:

a first step in which a supply flow (a) comprising a solvent-containing material that contains a solute and a solvent (b) is caused to flow with a permeate flow (d) by countercurrent flow or cocurrent flow through a forward osmosis membrane (o), causing the solvent (b) in the supply flow (a) to pass through the forward osmosis membrane (o) and move into the permeate flow (d), thereby obtaining a concentrated flow (c) comprising the concentrated solvent-containing material and a flow (e) comprising the diluted permeate flow (d), and
a second step in which the permeate flow (d) is separated into the solvent (b) and a flow (f) composed of the concentrated permeate flow (d), and
the permeate flow (d) is an inorganic salt solution containing a multivalent cation.

<Aspect 10> The system according to aspect 9, wherein the forward osmosis membrane (o) in the first step is in the form of a hollow fiber.
<Aspect 11> The system according to aspect 10, wherein in the first step:

the supply flow (a) is caused to flow into the hollow portion of the hollow-fiber forward osmosis membrane (o), and
the permeate flow (d) is caused to flow outside of the hollow-fiber forward osmosis membrane (o).

<Aspect 12> The system according to any one of aspects 9 to 11, wherein the second step is carried out by evaporation means.
<Aspect 13> The system according to any one of aspects 9 to 12, wherein the temperature of the permeate flow (d) in the second step is 50 to 90°C.
<Aspect 14> The system according to any one of aspects 9 to 13, wherein the permeate flow (d) in the first step is an inorganic salt solution containing a divalent cation.
<Aspect 15> The system according to any one of aspects 9 to 14, wherein the permeate flow (d) in the first step is a magnesium chloride solution.

<Aspect 16> The system according to any one of aspects 9 to 15, wherein:

the second step is based on a membrane distillation process using a porous membrane (p), and
the porous membrane (p) is made of a material that includes a fluorine-based polymer.

<Aspect 17 > The system according to aspect 16, wherein the separating membrane in the membrane distillation process is a porous membrane having a flux of 1 to 200 kg/(m$^2$ × hr) for the solvent (b).

<Aspect 18> The system according to any one of aspects 1 to 17, wherein the solvent-containing material is a food.

<Aspect 19> The system according to aspect 18, wherein the solvent-containing material is a coffee extract, juice, fruit juice, dairy product, soup stock, tea extract, flavoring emulsion, food oil emulsion or sweetener.

<Aspect 20> A concentrate of a tea extract that includes a component selected from among terpene compounds and their derivatives, wherein:

the terpene compounds include β-ionone,
the ratio $A_{ter}/A_{io}$ is 0.6 to 4.0, where $A_{io}$ is the peak area of β-ionone in the total ion chromatogram for the tea extract concentrate and $A_{ter}$ is the total peak area for terpene compounds other than β-ionone and their derivatives, and
the concentrate has a Brix value of 7.5 or greater as measured with a Brix meter.

<Aspect 21 > A concentrate of a tea extract according to aspect 20, wherein the ratio $A_{ter}/A_{io}$ is 1.0 to 4.0.

<Aspect 22> The concentrate according to aspect 20 or 21, wherein:

the tea extract is green tea extract,
the concentrate includes

at least one compound selected from among aliphatic alcohols and aliphatic aldehydes, and
at least one compound selected from among aromatic alcohols and aromatic aldehydes, and

the ratio $A_{ali}/A_{io}$ is 0.03 to 0.1 and the ratio $A_{aro}/A_{io}$ is 0.2 to 1.0, where $A_{io}$ is the peak area of β-ionone in the total ion chromatogram for the concentrate, $A_{ali}$ is the total peak area for aliphatic alcohols and aliphatic aldehydes, and $A_{aro}$ is the total peak area for aromatic alcohols and aromatic aldehydes.

<Aspect 23 > The concentrate according to aspect 22, wherein:

the terpene compounds other than β-ionone and their derivatives are selected from among linalool and its derivatives,
at least one selected from among the aliphatic alcohols and aliphatic aldehydes is hexanol, and
at least one selected from among the aromatic alcohols and aromatic aldehydes is phenylacetaldehyde.

<Aspect 24> The concentrate according to aspect 20 or 21, wherein:

the tea extract is hojicha extract,
the concentrate further includes at least one compound selected from among aromatic alcohols and aromatic aldehydes, and
the ratio $A_{aro}/A_{io}$ is 0.05 to 0.2, where $A_{io}$ is the peak area of β-ionone in the total ion chromatogram for the concentrate, and $A_{aro}$ is the total peak area for aromatic alcohols and aromatic aldehydes.

<Aspect 25> The concentrate according to aspect 24, wherein:

the terpene compounds other than β-ionone and their derivatives are selected from among linalool and its derivatives, and geraniol, and
at least one selected from among the aromatic alcohols and aromatic aldehydes is phenylacetaldehyde.

[ADVANTAGEOUS EFFECTS OF INVENTION]

According to the invention it is possible to inhibit movement of permeating substances from a permeate flow into a supply flow while separating and removing a solvent from the supply flow, to obtain a high-purity concentrate of a solvent-containing material. The system of the invention is capable of extended operation.

The invention can be suitably applied for uses such as concentration of foods, desalination of seawater, and treatment of accessory water discharged from gas or oil fields including shale gas or oil fields.

Use of the process of the invention for concentration of foods allows concentration of food products to a high level of purity without heating, thus allowing concentration of foods without degradation of flavor components and with a low degree of loss of aromatic components, to obtain high-quality, highly concentrated foods.

BRIEF DESCRIPTION OF DRAWINGS

FIG. 1 is a conceptual drawing as broad illustration of an embodiment of the system of the invention.
FIG. 2 is a conceptual drawing as broad illustration of another embodiment of the system of the invention.
FIG. 3 is a conceptual drawing showing an example of a method for cleaning a forward osmosis membrane to be used in the first step of the system of the invention.
FIG. 4 is a conceptual drawing broadly illustrating the system used in Examples 21 to 26, Reference Examples 1 to 4 and Comparative Examples 6 to 10.
FIG. 5 is the total ion chromatogram chart obtained in Example 21.
FIG. 6 is a conceptual drawing illustrating the procedure for calculating peak area in a total ion chromatogram chart.

DESCRIPTION OF EMBODIMENTS

<System for concentrating solvent-containing material>

The first aspect of the invention relates to a system for concentrating a solvent-containing material which has a first step in which a supply flow (a) comprising a solvent-containing material that contains a solute and a solvent (b) is caused to flow with a permeate flow (d) by countercurrent flow or cocurrent flow through a forward osmosis membrane (o), causing the solvent (b) in the supply flow (a) to pass through the forward osmosis membrane (o) and move into the permeate flow (d), thereby obtaining a concentrated flow (c) comprising the concentrated solvent-containing material and a flow (e) comprising the diluted permeate flow (d), wherein:

the permeate flow (d) is an inorganic salt solution containing a multivalent cation, and
the temperature of the permeate flow (d) in the first step is 5 to 60°C.

The system for concentrating a solvent-containing material of the invention may also have a second step in which the permeate flow (d) is separated into the solvent (b) and a flow (f) composed of the concentrated permeate flow (d).

According to this aspect, the invention relates to a system for concentrating a solvent-containing material which has:

a first step in which a supply flow (a) comprising a solvent-containing material that contains a solute and a solvent (b) is caused to flow with a permeate flow (d) by countercurrent flow or cocurrent flow through a forward osmosis membrane (o), causing the solvent (b) in the supply flow (a) to pass through the forward osmosis membrane (o) and move into the permeate flow (d), thereby obtaining a concentrated flow (c) comprising the concentrated solvent-containing material and a flow (e) comprising the diluted permeate flow (d), and
a second step in which the permeate flow (d) is separated into the solvent (b) and a flow (f) composed of the concentrated permeate flow (d),
wherein:

the permeate flow (d) is an inorganic salt solution containing a multivalent cation, and
the temperature of the permeate flow (d) in the first step is 5 to 60°C.

A preferred embodiment of the invention (hereunder referred to as "this embodiment") will now be explained in detail as a non-limitative example.

<First step>

The first step of the system for concentrating a solvent-containing material of this embodiment is a step in which a supply flow (a) comprising a solvent-containing material that contains a solute and a solvent (b) is caused to flow with a permeate flow (d) by countercurrent flow or cocurrent flow through a forward osmosis membrane (o), causing the solvent (b) in the supply flow (a) to pass through the forward osmosis membrane (o) and move into the permeate flow (d), thereby obtaining a concentrated flow (c) comprising the concentrated solvent-containing material and a flow (e) comprising the diluted permeate flow (d).

[Solute]

A solute is a substance selected from among inorganic compounds and organic compounds, and it is preferably one that dissolves in the solvent (b).

[Solvent (b)]

Solvent (b) is a liquid. Solvent (b) may be any inorganic solvent or organic solvent. Solvent (b) is present in the supply flow (a) as a liquid. Solvent (b) will usually be water.

[Supply flow (a)]

A supply flow (a) is a fluid comprising a solvent-containing material, containing a solute and solvent (b). The solvent-containing material forming the supply flow (a) may be either a solution or emulsion, examples of which include foods, seawater, and accessory water discharged from gas or oil fields.

With the system of this embodiment, it is possible to concentrate a solvent-containing material comprising a supply flow (a), without the permeating substances in the permeate flow moving through the forward osmosis membrane into the supply flow (a) and without requiring heating of the supply flow (a).

By applying the system of the invention for concentration of a food, therefore, it is possible to obtain a concentrated food with no degradation of flavor components and with low loss of aromatic components.

The solvent-containing material in the supply flow (a) is therefore preferably a food. Preferred examples of foods are coffee extracts, juices (for example, orange juice or tomato juice), fruit juices (for example, apple, grape, orange, grapefruit or lemon fruit juices), dairy products (for example, lactic acid bacteria beverages or raw milk), soup stocks (for example, sea tangle soup stock or bonito stock), tea extracts (for example, green tea, sencha (medium-grade green tea), hojicha (roasted green tea), gyokuro (refined green tea), kabusecha (covered tea) or tencha (sweet tea) extract), seasonings (for example, soy sauce, Worcestershire sauce or spice solutions), flavoring emulsions (for example, emulsions of vanilla essence or strawberry essence), food oil emulsions (for example, emulsions of rapeseed oil, sunflower oil, carthamus oil or corn oil), and sweeteners (natural sweeteners such as stevioside, glycyrrhizinic acid, glucose, fructose, maltose, sucrose, oligosaccharides, honey, maple syrup, agave syrup, palm sugar, coconut sugar, thaumatin or rice jelly).

[Permeate flow (d)]

The permeate flow (d) is a fluid comprising a permeating substance and its solvent, and it has a higher osmotic pressure than the supply flow (a) while not significantly altering the forward osmosis membrane (o). When the supply flow (a) and permeate flow (d) are contacted through the forward osmosis membrane (o) which is a semipermeable membrane, the solvent (b) in the supply flow (a) permeates the forward osmosis membrane (o), moving into the permeate flow (d). Using the permeate flow (d) allows a forward osmosis process to be carried out to concentrate the solvent-containing material.

A forward osmosis process is one in which two fluids with different osmotic pressures are contacted through a semipermeable forward osmosis membrane (o), and the solvent is caused to move from the low osmotic pressure side to the high osmotic pressure side.

The permeating substance used for this embodiment is an inorganic salt that includes a multivalent cation. Because a multivalent cation has a large hydrated ion radius, its movement from the permeate flow (d) into the supply flow (a) through the forward osmosis membrane (o) during the forward osmosis process is inhibited, allowing a high-purity concentrate of the solvent-containing material to be obtained.

An inorganic salt including a multivalent cation as the permeate flow (d) is applied as a solution dissolved in a solvent. A suitable solvent in this case is water, for example.

The multivalent cation in the inorganic salt is a divalent to tetravalent cation. Examples of multivalent cations include copper(II) ion, iron(II) ion, magnesium ion, manganese ion and chromium(II) ion, as divalent cations; iron(III) ion and chromium(III) ion as trivalent cations; and chromium(IV) ion as a tetravalent cation.

Examples of anions in inorganic salts include halide ions, sulfate ion and nitrate ion. A halide ion is preferably chloride ion, bromide ion or iodide ion, and more preferably chloride ion.

Specific examples of inorganic salts including multivalent cations include copper(II) chloride, iron(II) chloride, magnesium chloride, manganese chloride, chromium(II) chloride, copper(II) sulfate, iron(II) sulfate, iron(III) chloride, magnesium sulfate, chromium(II) sulfate, manganese sulfate, calcium chloride and calcium sulfate, as inorganic salts containing divalent cations, and chromium(III) chloride, iron(III) sulfate and chromium(III) sulfate, as inorganic salts containing trivalent cations.

Preferred permeating substances for this embodiment are inorganic salts containing divalent cations, with magnesium chloride being more preferred from the viewpoint of low movement of the permeating substance through the forward osmosis membrane. When a magnesium chloride solution is used as the permeate flow (d), there will tend to be less accretion onto the porous membrane (p) when a porous membrane (p) is used for extended operation in the second step that is preferably provided in the system for concentrating a solvent-containing material of this embodiment, and it is therefore preferred in order to allow stable operation for prolonged periods.

The solvent in the permeate flow (d) is preferably the same type of solvent as the solvent (b) that is to be separated from the supply flow (a) of the solvent-containing material. When the solvent in the solvent-containing material is water, the solvent in the permeate flow (d) is also preferably water.

The concentration of the permeating substance in the permeate flow (d) is set so as to be higher than the osmotic pressure of the supply flow (a). The osmotic pressure of the permeate flow (d) may vary within a range, so long as it is higher than the osmotic pressure of the supply flow (a). Either of the following two methods may be used to judge the difference in osmotic pressure between two liquids.

(1) When two-phase separation takes place after mixing of the two liquids: The liquid whose volume increased after two-phase separation is judged to have high osmotic pressure, or

(2) When two-phase separation does not take place after mixing of the two liquids: The two liquids are contacted through the forward osmosis membrane (o) described below and the liquid with increased volume after a fixed period of time has elapsed is judged to have high osmotic pressure. The fixed period of time in this case will depend on the difference in osmotic pressure, but it will generally be in a range of several minutes to several hours.

In the first step, the temperature of the permeate flow (d) is 5 to 60°C. The temperature of the permeate flow (d) is preferably 15 to 40°C. While the reason for this is not completely understood, presumably a permeate flow (d) temperature of below 15°C or higher than 60°C results in greater movement of permeating substances from the permeate flow (d) into the supply flow (a) through the forward osmosis membrane (o).

[Forward osmosis membrane (o)]

A forward osmosis membrane (o) is a membrane having the function of causing permeation of the solvent (b) without allowing the solute to permeate.

The forward osmosis membrane (o) may be one composed of a single layer, or it may have a support layer and a separation active layer on the support layer.

The form of the forward osmosis membrane (o) may be a hollow fiber, a flat membrane or a spiral membrane.

A flat forward osmosis membrane (o) may be one composed of a single layer (support layer), or it may have a support layer and a separation active layer on the support layer, for example. A hollow-fiber forward osmosis membrane (o) may be a hollow fiber composed of a single layer (support layer), or it may have a hollow fiber support layer and a separation active layer on the outer surface or inner surface, or both surfaces, of the support layer, for example.

The form of the forward osmosis membrane (o) is preferably a hollow fiber form for greater membrane area per unit volume, and allowing efficient, high concentration.

When the forward osmosis membrane (o) is in the form of a hollow fiber, preferably the supply flow (a) is allowed to flow through the hollow portion of the hollow-fiber forward osmosis membrane (o) while the permeate flow (d) is allowed to flow on the outside of the hollow-fiber forward osmosis membrane (o), for easier cleaning of the forward osmosis membrane (o).

The support layer of the forward osmosis membrane (o) will generally be one made of a nonwoven fabric.

Examples of nonwoven fabric materials include polyester, polyethylene, polypropylene and polyamide.

For higher rejectivity of the permeating substance, the separation active layer of the forward osmosis membrane (o) is preferably a layer composed mainly of at least one substance selected from among polysulfone, polyethersulfone, polyvinylidene fluoride, polyacrylonitrile, polyethylene, polypropylene, polyamide and cellulose acetate. It is more preferably composed mainly of at least one substance selected from among polysulfone, polyethersulfone, polyvinylidene fluoride, polyacrylonitrile and polyamide.

The polyamide in the separation active layer can be formed by interfacial polymerization of a polyfunctional acid halide and a polyfunctional aromatic amine.

A polyfunctional aromatic acid halide is an aromatic acid halide having two or more acid halide groups in the molecule. Specific examples include trimesic acid halide, trimellitic acid halide, isophthalic acid halide, terephthalic acid halide, pyromellitic acid halide, benzophenonetetracarboxylic acid halide, biphenyldicarboxylic acid halide, naphthalenedicarboxylic acid halide, pyridinedicarboxylic acid halide and benzenedisulfonic acid halide, any of which may be used alone or in admixture. The halide ions of these aromatic acid halides may be chloride ion, bromide ion or iodide ion, for example. According to the invention it is particularly preferred to use trimesic acid chloride alone, or a mixture of trimesic acid chloride and isophthalic acid chloride, or a mixture of trimesic acid chloride and terephthalic acid chloride.

A polyfunctional aromatic amine is an aromatic amino compound having two or more amino groups in the molecule. Specific examples include *m*-phenylenediamine, *p*-phenylenediamine, 3,3'-diaminodiphenylmethane, 4,4'-diaminodiphenylamine, 4,4'-diaminodiphenyl ether, 3,4-diaminodiphenyl ether, 3,3'-diaminodiphenylamine, 3,5-diaminobenzoic acid, 4,4'-diaminodiphenylsulfone, 3,3'-diaminodiphenylsulfone, 3,4'-diaminodiphenylsulfone, 1,3,5,-triaminobenzene and 1,5-diaminonaphthalene, any of which may be used alone or in admixture. According to the invention it is particularly preferred to use one or more from among *m*-phenylenediamine and *p*-phenylenediamine.

The interfacial polymerization between the polyfunctional acid halide and the polyfunctional aromatic amine can be carried out by an established method.

The flux of the forward osmosis membrane (o) for the solvent (b) is preferably 1 to 100 $kg/(m^2 \times hr)$. If the flux is less than 1 $kg/(m^2 \times hr)$ the efficiency of separating the solvent (b) may be impaired, and if it is greater than 100 $kg/(m^2 \times hr)$ the amount of permeating substance moving from the permeate flow (d) into the concentrated flow (c) through the forward osmosis membrane (o) may increase.

For the purpose of the present specification, the flux for the solvent (b) is the amount of solvent (b) passing through the forward osmosis membrane (o) per unit area of the forward osmosis membrane (o) and per unit time, and it is defined by the following mathematical formula (1).

$$F = L/(M \times H)(1)$$

In this formula, F is the flux for the solvent (b) $(kg/(m^2 \times hr))$, L is the amount of permeated solvent (b) (kg), M is the surface area of the forward osmosis membrane (o) $(m^2)$ and H is time (hr).

When the solvent (b) is water, the flux is generally referred to as the "permeability", and for example, purified water may be used as the treatment solution and 3.5 mass% brine may be used as the induction solution for measurement.

[Flow (e)]

The flow (e) is the flow composed of the permeate flow (d) and the solvent (b) that has permeated the forward osmosis membrane (o) from the supply flow (a). Specifically, when the solvent (b) moves from the supply flow (a) to the permeate flow (d) through the forward osmosis membrane (o), this forms a flow (e) composed of the diluted permeate flow (d).

[Concentrated flow (c)]

The concentrated flow (c) is the flow after the solvent (b) has moved from the supply flow (a) through the forward osmosis membrane (o), and it is composed of a concentrate of the solvent-containing material.

The concentrated flow (c) is the product obtained by the system for concentrating a solvent-containing material of this embodiment.

[Concrete mode of first step]

The first step of the solvent separation system of this embodiment will now be described with reference to the accompanying drawings as necessary.

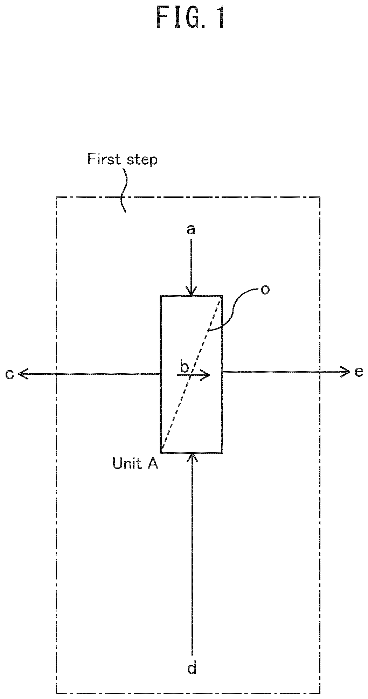

Fig. 1 shows an overview of a concrete mode for a solvent separation system of this embodiment which comprises the first step.

In the first step, a forward osmosis unit A is used, which is designed to allow countercurrent flow or cocurrent flow of two flow streams through the forward osmosis membrane (o).

The first step shown in Fig. 1 is designed so that in unit A, a supply flow (a) comprising a solvent-containing material that includes a solute and a solvent (b), and a permeate flow (d), are caused to flow in a countercurrent flow through a forward osmosis membrane (o). Unit A may also have a construction that causes the supply flow (a) and permeate flow (d) to flow in a cocurrent flow. In either case, the permeate flow (d) is an inorganic salt solution that includes a multivalent cation, and the temperature is controlled to 5 to 60°C.

With this construction, the solvent (b) in the supply flow (a) passes through the forward osmosis membrane (o) and moves into the permeate flow (d). The solvent (b) moves by a forward osmosis process, allowing efficient solvent separation to be carried out with low energy.

The permeate flow (d), being mixed with the moved solvent (b), turns into a flow (e) comprising the diluted permeate flow (d), and is discharged from unit A.

When the solvent (b) moves in and is removed, the supply flow (a) is recovered from the unit A as a concentrated flow (c) composed of the concentrated solvent-containing material, as the final product of the solvent separation system of this embodiment.

<Second step>

The second step which is optionally employed in the solvent separation system of this embodiment is a step in which the permeate flow (d) is separated into the solvent (b) and a flow (f) comprising the concentrated permeate flow (d).

The permeate flow (d) is preferably adjusted to a prescribed temperature in the second step. The temperature of the permeate flow (d) in the second step is preferably adjusted to 50°C to 90°C. If the temperature is lower than 50°C the efficiency of separation of the solvent (b) by membrane distillation may be impaired, and if it is higher than 90°C, a greater amount of permeating substance in the permeate flow (d) may move into the solvent (b). The heat source used to adjust the temperature of the permeate flow (d) may be a heat exchanger or exhaust heat from an industrial process, for example.

The step of separating the permeate flow (d) into the solvent (b) and the flow (f) may be carried out by evaporation means, for example. Examples of evaporation means include distillation processes and membrane distillation processes.

A distillation process is one in which, after the permeate flow (d) has been adjusted to the prescribed temperature, it is fed into the distillation column and solvent (b) is obtained from the column top, while the flow (f) comprising the concentrated permeate flow (d) from which the solvent (b) has been removed is obtained from the column bottom.

A membrane distillation process is one having a configuration in which a porous membrane (p) is used as a separating membrane to separate the separation chamber into a liquid phase unit and a gas phase unit, and the solvent (b) in the permeate flow (d) passes from the liquid phase unit through the porous membrane (p) in the form of steam, moving into the depressurized gas phase unit and thereby separating the permeate flow (d) into the solvent (b) and the flow (f). Therefore, the porous membrane (p) that can be used as the separating membrane in a membrane distillation process may be one having a function that allows steam of the solvent (b) to pass through but prevents the permeate flow (d) from passing through.

The second step is preferably carried out by a membrane distillation process using a porous membrane (p), from the viewpoint of allowing the equipment size to be reduced and helping to prevent movement of permeating substances from the permeate flow (d) into the solvent (b).

[Porous membrane (p)]

The porous membrane (p) has the function of allowing steam of the solvent (b) to pass through but prevents the permeate flow (d) from passing through. In order to exhibit this function, the porous membrane (p) may have pores (communicating pores) running through from one side to the other side. The communicating pores may be direct through-holes or branched pores.

If the porous membrane (p) is solvophilic, the solvent in the porous membrane (p) may permeate to the gas phase side during the membrane distillation, potentially impairing the separation efficiency of the membrane distillation. From the viewpoint of avoiding wetting, therefore, the porous membrane (p) is preferably solvophobic, and especially hydrophobic.

The water contact angle is known as an indicator of hydrophobicity. The water contact angle of the porous membrane (p) for this embodiment is preferably 90° or greater at any location of the membrane. The water contact angle of the porous membrane (p) is more preferably 110° or greater and even more preferably 120° or greater. While there is no upper limit for the water contact angle of the porous membrane (p), it may be less than 180°, and is realistically 150° or less.

The water contact angle of the porous membrane (p) is the value measured by the droplet method. In the droplet method used herein, 2 $\mu$L of purified water is dropped onto the surface of the object to be measured and the angle formed between the object and the droplet is analyzed based on a projection image, the digitized value being used as the water contact angle.

From the viewpoint of increasing efficiency of the membrane distillation using the porous membrane (p) while inhibiting wetting of the membrane, it is also important for the pore diameter and pore size distribution of the pores in the porous membrane (p) to be appropriately adjusted. Specifically, large-diameter pores or wide pore size distributions, or both, facilitate penetration of the solvent into the porous membrane (p), thus tending to result in wetting. Very small-diameter pores, on the other hand, can lower the permeation rate for steam.

Considering both of these situations, the pore diameters of the pores of the porous membrane (p) are preferably 0.01 $\mu$m to 1.00 $\mu$m, and more preferably 0.03 $\mu$m to 0.60 $\mu$m, as the average pore diameter. If the pore diameters of the pores of the porous membrane (p) are smaller than 0.01 $\mu$m, the permeation resistance for steam will excessively increase, impairing the membrane distillation efficiency, and if they are larger than 1.0 $\mu$m it will become difficult to inhibit wetting even with improved hydrophobicity of the membrane, and therefore neither is suitable. A narrower pore size distribution is preferred for the porous membrane (p) from the viewpoint of both increasing the membrane distillation efficiency and inhibiting wetting. Specifically, the ratio of the maximum pore diameter with respect to the average pore diameter is preferably in the range of 1.2 to 2.5.

From the viewpoint of obtaining sufficiently high membrane distillation efficiency, the porosity of the porous membrane (p) is preferably 50 vol% to 85 vol%. If the porosity is lower than 50 vol% the membrane distillation efficiency will be impaired, while if it is higher than 85% the strength of the membrane itself may be reduced, potentially resulting in problems such as membrane fracture during prolonged use, and therefore neither is suitable.

The form of the porous membrane (p) may be a hollow fiber, a flat membrane or a spiral membrane. The form of the porous membrane (p) is preferably a hollow fiber from the viewpoint of increasing the membrane area per unit volume and allowing more efficient membrane distillation.

The outer diameter of the hollow fiber membrane may be 300 $\mu$m to 5,000 $\mu$m and is preferably 350 $\mu$m to 4,000 $\mu$m, for example, and the inner diameter of the hollow fiber membrane may be 200 $\mu$m to 4,000 $\mu$m and is preferably 250 $\mu$m to 3,000 $\mu$m, for example.

For this embodiment, from the viewpoint of the water permeability during membrane distillation and the membrane mechanical strength, the membrane thickness of the porous membrane is preferably 10 $\mu$m to 1,000 $\mu$m and more preferably 15 $\mu$m to 1,000 $\mu$m. A membrane thickness of 1,000 $\mu$m or smaller will allow high membrane distillation efficiency to be maintained. A membrane thickness of 10 $\mu$m or greater, on the other hand, can prevent deformation of the membrane even during use under reduced pressure.

The flux of the porous membrane (p) for the solvent (b) is preferably 1 to 200 kg/(m$^2$ $\times$ hr). A flux of less than 1 kg/(m$^2$ $\times$ hr) may impair efficient separation of the solvent (b), while a flux of greater than 200 kg/(m$^2$ $\times$ hr) may increase the amount of permeating substance moving from the flow (d) into the solvent (b) through the porous membrane (p).

The flux is defined in the same manner as the flux of the porous membrane (o) for the solvent (b) in the first step.

The material of which the porous membrane (p) is composed is preferably one that includes a hydrophobic polymer, and it may be composed of a material having inorganic porous particles such as hydrophobic silica dispersed in a hydrophobic polymer.

A hydrophobic polymer is a polymer with low affinity for water, examples of which include aromatic polymers containing sulfonyl groups, polyolefins, and fluorine-based polymers, and the material may include one or more of these resins. Examples of aromatic polymers containing sulfonyl groups include polysulfone and polyethersulfone. Examples of polyolefins include polyethylene and polypropylene. Examples of fluorine-based polymers include polyvinylidene fluoride, polytetrafluoroethylene and ethylene-ethylene tetrafluoride copolymer and polychlorotrifluoroethylene. Fluorine-based polymers are preferred from the viewpoint of hydrophobicity, film formability, mechanical durability and thermal durability.

A hydrophobic polymer as the material for the porous membrane (p) is more preferably one that has had the impurities, such as plasticizers, removed by scouring after polymerization or after formation of the membrane.

It is important to not only increase the hydrophobicity of the membrane material in order to prevent wetting of the porous membrane as mentioned above, but to also improve cleaning at the locations that are susceptible to wetting. For this embodiment, all or part of the length of the porous membrane (p) may be coated with a hydrophobic polymer so that the membrane surface has stable hydrophobicity. At least a portion of the inner surface, the outer surface and the surfaces of the communicating pores in the membrane wall portions of the hollow fiber membrane may be coated in the cross-sectional direction of the membrane.

[Solvent (b)]

The solvent (b) obtained in the second step has a content of permeating substances which is very low, and essentially zero, and it can be reutilized as the solvent (b) in the solvent separation system of this embodiment, or as a solvent for another purpose.

[Flow (f)]

The flow (f) obtained in the second step consists of the concentrated permeate flow (d) from which the solvent (b) has been removed. The flow (f) may have solvent (b) added for adjustment to a prescribed concentration, for its reuse as a permeate flow (d) in the solvent separation system of this embodiment.

[Membrane distillation]

Use of a membrane distillation process as means for separating the permeate flow (d) into the solvent (b) and flow (f) in the second step will now be described.

The following methods are known, which are based on the main principle of membrane distillation.

The DCMD (Direct Contact Membrane Distillation) method: in which solvent vapor produced by membrane distillation is directly taken into a condenser through a porous membrane,

the AGMD (Air Gap Membrane Distillation) method: in which a third gas phase unit is provided between the membrane distillation gas phase unit and the condenser gas phase unit, and solvent vapor is concentrated from the membrane distillation gas phase unit on the surface of the cooling unit of the condenser, to obtain the concentrated solvent,

the VMD (Vacuum Membrane Distillation) method: in which a vacuum gap is provided inside the third gas phase unit in the AGMD method described above, and solvent vapor is caused to move from the membrane distillation gas phase unit to the condenser, to obtain the concentrated solvent, and

the SGMD (Sweeping Gas Membrane Distillation) method: in which, in the AGMD method, sweeping gas is streamed into the third gas phase unit and solvent vapor is caused to move from the membrane distillation gas phase unit into the condenser, to obtain the concentrated solvent.

A VMD system is preferred among these because it allows stable permeated water quality to be obtained.

[Concrete mode of second step]

A case where the solvent separation system of this embodiment has a second step will now be described with reference to the accompanying drawings as necessary.

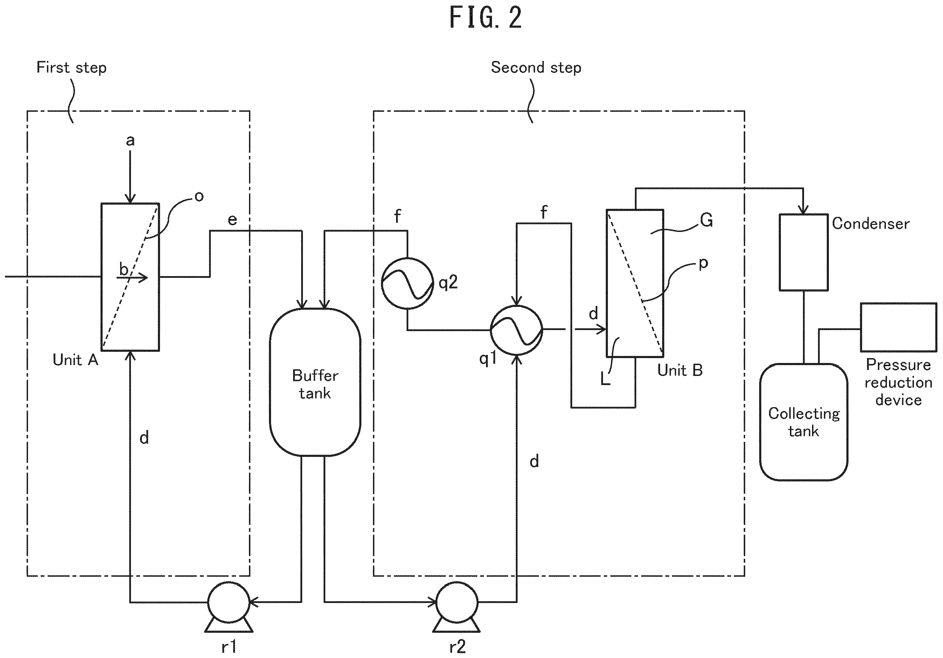

Fig. 2 shows an overview of a concrete mode for a solvent separation system of this embodiment which comprises the first step and second step.

The first step shown in Fig. 2 is the same as in Fig. 1.

A membrane distillation unit B is used in the second step of Fig. 2. Unit B is designed with a liquid phase unit L and a gas phase unit G separated by the porous membrane (p), to allow the pressure in the gas phase unit G to be reduced.

In the second step, the permeate flow (d) is fed into the liquid phase unit L of unit B and the solvent (b) in the permeate flow (d) is caused to move through the porous membrane (p) into the gas phase unit G which is at reduced pressure, thereby separating it into the solvent (b) and the flow (f) composed of the concentrated permeate flow (d).

The permeate flow (d) is preferably adjusted to the aforementioned prescribed temperature (50°C to 90°C) before being introduced into the liquid phase unit L. If the temperature is lower than 50°C the efficiency of separation of the solvent (b) by membrane distillation may be impaired, and if it is higher than 90°C, a greater amount of permeating substance in the permeate flow (d) may move into the solvent (b) through the porous membrane (p).

The heat source used for heating of the permeate flow (d) may be a heat exchanger q1, or exhaust heat from an industrial process, for example. Exhaust heat is preferably used as the heat source because it can reduce the level of fresh energy consumed for separation of the solvent (b).

The gas phase unit G of the unit B is preferably depressurized to the prescribed pressure together with the gas phase units for the condenser and collecting tank. The pressure of the gas phase unit G may be appropriately set depending on the scale of the apparatus, the concentration of the permeate flow (d) and the desired production rate for the solvent (b), and it may be 0.1 to 80 kPa, for example, and preferably 1 to 50 kPa.

The pressure reduction device for depressurization of the gas phase unit G of the unit B may be a diaphragm vacuum pump, a dry pump, an oil rotary vacuum pump, an ejector or an aspirator, for example.

In second step, the permeate flow (d) from which the solvent (b) has been removed, turns into a flow (f) composed of the concentrated permeate flow (d), and is discharged from unit B.

As mentioned above, the flow (f) may have solvent (b) added for adjustment to a prescribed concentration, for its reuse as a permeate flow (d). When the flow (f) is reutilized, a cooling device q2 may be used to adjust the temperature of the flow (f). The cooling device q2 used may be a chiller or heat exchanger, for example.

The solvent (b) removed as steam from the permeate flow (d) in the second step is concentrated in the condenser into a liquid solvent (b), and it is stored in a collecting tank, for example. The collected solvent may be reutilized as solvent (b) if necessary.

The symbols r1 and r2 in Fig. 2 referred to above are both pumps for liquid conveyance.

In the system for concentrating a solvent-containing material shown in Fig. 2, a buffer tank may be introduced between the first step and second step to mix the flow (e) and flow (f) and adjust the concentration of the permeate flow (d).

By using the system for concentrating a solvent-containing material of this embodiment having a first step and second step as described above, it is possible to obtain a high-purity concentrate without inclusion of permeating substances and to simultaneously recover the solvent (b) at high purity.

<Method for concentrating a solvent-containing material>

The system for concentrating a solvent-containing material of the invention may be applied in a method for concentrating a solvent-containing material.

The method for concentrating a solvent-containing material of this embodiment is a method utilizing the system for concentrating a solvent-containing material of the embodiment described above for separation of solvent (b) from a solvent-containing material comprising a solute and solvent (b), and concentrating the solvent-containing material.

<Concentrate>

A second aspect of the invention provides a high-quality concentrate.

As mentioned above, the concentration method of the invention exhibits its maximal effect when the solvent-containing material is a food, such as a coffee extract, juice, fruit juice, dairy product, soup stock, tea extract, flavoring emulsion, food oil emulsion or sweetener. A case where the solvent-containing material is a tea extract will now be used to explain how a concentrate is obtained without impairing the flavor component of the solvent-containing material, using the concentration method of the invention.

<Tea extract concentrate>

The tea extract to be used in the concentration method of the invention may be any publicly known extract of tea leaves.

The tea leaves may be unfermented tea, weak fermented tea, semi-fermented tea, fermented tea or post-fermented tea, for example, among which steamed tea and pot-roasted tea are well known as unfermented teas, oolong tea is well known as semi-fermented tea, and black tea is well known as fermented tea. Examples of steamed teas include green tea, sencha, hojicha, gyokuro, kabusecha and tencha. Examples of pot-roasted teas include Ureshino tea and Aoyagi tea, as well as various Chinese teas.

Tea extract may be prepared by adding water at a suitable temperature to the tea leaves and stirring the mixture or allowing it to stand. The water used for extraction may also have an extraction aid, an organic acid (such as ascorbic acid) or an organic acid salt (such as sodium ascorbate) added beforehand. During extraction, boiling deaeration or inert gas aeration may be carried out to remove the dissolved oxygen in the water for extraction in a nonoxidative atmosphere.

The direct liquid extract from the tea leaves may be used as the tea extract, or a dried tea extract (for example, commercially available green tea water-extracted powder) may be dissolved in water for use, or a concentrated tea extract may be diluted with water, or any two or more of these may be used in combination.

Examples of flavor components present in tea extracts include terpene compounds, terpene compound derivatives, aliphatic alcohols, aliphatic aldehydes, aromatic alcohols and aromatic aldehydes.

Examples of terpene compounds and their derivatives include β-ionone, linalool, geraniol, nerol, menthol and taxol. Linalool is a powerful flavor component with a fruity aroma, and is found in many tea leaf extracts. Geraniol is also a powerful flavor component with a fruity aroma, and it is found in hojicha extract, for example.

Examples of aliphatic alcohols include hexanol, 1-butanol, 2-butanol and isobutanol, while hexanal is an example of an aliphatic aldehyde. The aliphatic alcohol hexanol is a powerful flavor component with a plant-like aroma, and is found in green tea extract.

Examples of aromatic alcohols include β-phenylethyl alcohol, α-hexylcinnamicaldehyde and benzyl alcohol, while phenylacetaldehyde is an example of an aromatic aldehyde. Phenylacetaldehyde is a powerful flavor component with a sweet aroma, and is found in numerous tea leaf extracts.

Methods for concentrating tea extracts in the prior art employ vacuum distillation, for example. Vacuum distillation is carried out under operating conditions with a pressure of 133 Pa and a temperature of 80°C, for example. Since vacuum distillation accomplishes concentration with heating or in a vacuum, the flavor components tend to volatilize off and dissipate during concentration.

The terpene compound β-ionone has a boiling point of 267°C at ordinary pressure and a boiling point of 90°C at 133 Pa, and does not volatilize under typical vacuum distillation operating conditions, and it can therefore be used as a reference component for flavor component analysis of tea extract concentrates in prior art methods as well. For the purpose of the invention, the relative concentrations of flavor components with respect to β-ionone were examined to verify the flavor of the tea extract concentrate.

The (degree of) concentration of the tea extract concentrate was examined by applying the Brix value determined using a commercially available sugar concentration meter (Brix meter).

A tea extract concentrate of the invention is a tea extract concentrate that includes a component selected from among terpene compounds and their derivatives, wherein:

the terpene compounds include $\beta$-ionone,

the ratio $A_{ter}/A_{io}$ is 0.6 to 4.0, where $A_{io}$ is the peak area of $\beta$-ionone in the total ion chromatogram for the tea extract concentrate and $A_{ter}$ is the total peak area for terpene compounds other than $\beta$-ionone and their derivatives, and the concentrate has a Brix value of 7.5 or greater as measured with a Brix meter.

The peak area ratio $A_{ter}/A_{io}$ in the total ion chromatogram is preferably 0.6 or greater from the viewpoint of maintaining the flavor of the tea extract. The peak area ratio $A_{ter}/A_{io}$ value is more preferably 1.0 or greater and even more preferably greater than 1.0. The peak area ratio $A_{ter}/A_{io}$ value preferably does not exceed 4.0, however, because the characteristic odor of terpene will become too strong and the original flavor of the tea extract will be compromised. The peak area ratio $A_{ter}/A_{io}$ value is more preferably 1.1 to 2.0 and even more preferably 1.2 to 1.8.

No tea extract concentrate is known in the prior art having a peak area ratio $A_{ter}/A_{io}$ of 0.6 to 4.0 and a Brix value of 5.0 or greater. Using the system for concentrating a solvent-containing material of the invention, however, it is possible to efficiently obtain a tea extract concentrate greatly exceeding the levels of the prior art, and specifically having a peak area ratio $A_{ter}/A_{io}$ of 0.6 to 4.0 and a Brix value of 7.5 or greater.

(Green tea extract concentrate)

When the tea extract is a green tea extract, the concentrate may further include, in addition to a component selected from among terpene compounds and their derivatives,
at least one compound selected from among aliphatic alcohols and aliphatic aldehydes and at least one compound selected from among aromatic alcohols and aromatic aldehydes, and
the ratio $A_{ali}/A_{io}$ may be 0.03 to 0.1 and the ratio $A_{aro}/A_{io}$ may be 0.2 to 1.0, where $A_{io}$ is the peak area of $\beta$-ionone in the total ion chromatogram for the concentrate, $A_{ali}$ is the total peak area for aliphatic alcohols and aliphatic aldehydes, and $A_{aro}$ is the total peak area for aromatic alcohols and aromatic aldehydes.

In addition to a peak area ratio $A_{ter}/A_{io}$ of 0.6 to 4.0 in the total ion chromatogram for the green tea extract concentrate,
preferably the peak area ratio $A_{ali}/A_{io}$ for at least one selected from among aliphatic alcohols and aliphatic aldehydes, and $\beta$-ionone, is 0.03 to 0.1. If the peak area ratio $A_{ali}/A_{io}$ is 0.03 or greater, the flavor of the green tea will be effectively maintained even in the concentrate. It is not preferred for the peak area ratio $A_{ali}/A_{io}$ to exceed 0.1, however, because unpleasant plant-like odors will become more prominent. The peak area ratio $A_{ali}/A_{io}$ value is more preferably 0.04 to 0.08.

In addition to the above, the green tea extract concentrate also preferably has a peak area ratio $A_{aro}/A_{io}$ of 0.2 to 1.0 for at least one selected from among aromatic alcohols and aromatic aldehydes, and $\beta$-ionone. The peak area ratio $A_{aro}/A_{io}$ is preferably 0.2 or greater as the flavor of the green tea in the concentrate will be ensured. The peak area ratio $A_{aro}/A_{io}$ value preferably does not exceed 2.0, however, because the characteristic odor of the aromatic alcohols or aldehydes will become too strong and the original flavor of the green tea will be compromised. The peak area ratio $A_{aro}/A_{io}$ value is more preferably 0.3 to 1.0 and even more preferably 0.4 to 0.7.

For flavor component analysis of the green tea extract concentrate, the flavor components may be analyzed by the relative concentrations (peak area ratios) with respect to $\beta$-ionone, for linalool and its derivatives, as components selected from among non-$\beta$-ionone terpene compounds and their derivatives, for hexanol, as at least one type selected from among aliphatic alcohols and aliphatic aldehydes, and for phenylacetaldehyde, as at least one type selected from among aromatic alcohols and aromatic aldehydes. In this case, linalool oxide may be selected as a linalool derivative.

(Hojicha extract concentrate)

When the tea extract is hojicha extract, the concentrate may further include, in addition to a component selected from among terpene compound and their derivatives,
at least one compound selected from among aromatic alcohols and aromatic aldehydes, and
the ratio $A_{aro}/A_{io}$ may be 0.05 to 0.2, where $A_{io}$ is the peak area of $\beta$-ionone in the total ion chromatogram for the concentrate, and $A_{aro}$ is the total peak area for aromatic alcohols and aromatic aldehydes.

In addition to a peak area ratio $A_{ter}/A_{io}$ of 0.6 to 4.0 in the total ion chromatogram for the hojicha extract concentrate,
preferably the peak area ratio $A_{aro}/A_{io}$ is 0.05 to 0.2 for at least one selected from among aromatic alcohols and aromatic aldehydes, and $\beta$-ionone. The peak area ratio $A_{aro}/A_{io}$ is preferably 0.05 or greater to maintain the flavor of the hojicha even in the concentrate. The peak area ratio $A_{aro}/A_{io}$ value preferably does not exceed 0.2, however, because the characteristic odor of the aromatic alcohols or aldehydes will become too strong and the original flavor of the hojicha tea will be compromised. The peak area ratio $A_{aro}/A_{io}$ value is more preferably 0.07 to 0.15 and even more preferably 0.08 to 0.12.

For flavor component analysis of the hojicha extract concentrate, the flavor components may be analyzed by the relative concentrations (peak area ratios) with respect to $\beta$-ionone, for linalool and its derivatives and also geraniol, as non-$\beta$-ionone terpene compounds and their derivatives, and for phenylacetaldehyde, as at least one type selected from among aromatic alcohols and aromatic aldehydes. In this case, linalool oxide may be selected as a linalool derivative.

<Detection of flavor components>

The concentration of flavor components is determined by supplying the tea extract concentrate to gas chromatography mass spectrometry (GC/MS) and performing calculation from the obtained total ion chromatogram chart. In the total ion chromatogram charts used herein, the peak area of each flavor component was determined as a relative value with respect to the peak area for $\beta$-ionone, and the value was used as an index of the concentration of each flavor component.

The following procedure was used.

After pouring 1 mg of tea extract concentrate into a 20 mL screw vial for head space, it is sealed with a septum-equipped screw cap and heated at 80°C for 15 minutes. A solid-phase microextraction fiber (for example, SPME Fiber by SIGMA-ALDRIC) is then inserted into the vial through the cap septum, trapping the volatile components for 15 minutes at 80°C. The trapped volatile components are introduced to GC/MS through the solid-phase microextraction fiber and analyzed by GC/MS, to obtain a total ion chromatogram chart. The peaks for the flavor components that appear in the chart may be identified from a publicly known mass spectrum database. An example of a database that may be used is "NIST17", published in 2017 by the NIST (National Institute of Standards and Technology).

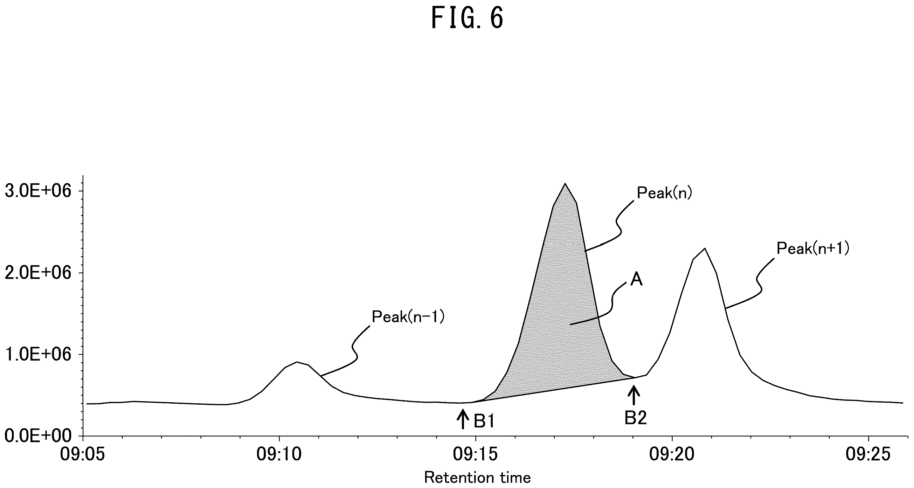

The procedure for determining the peak area of $\beta$-ionone and other flavor components from a total ion chromatogram chart will now be explained with reference to Fig. 6. Fig. 6 is an example of a total ion chromatogram chart obtained by GC/MS analysis, the abscissa representing retention time RT and the ordinate representing relative intensity.

Of the peaks appearing in this chart, the peak area of "peak (n)" appearing as the nth peak from the short retention time end is determined as follows, using "peak (n)", the (n-1)th "peak (n-1)" and the (n+1)th "peak (n+1)".

A point "B1" between the peak (n-1) and the peak (n) is determined that has the smallest value on the ordinate. Similarly, a point "B2" between the peak (n) and the peak (n+1) is determined that has the smallest value on the ordinate. The area of the region delineated by a curve defining the peak (n) and a straight line connecting point B1 and point B2 is determined as the peak area A of the peak (n) (the gray area in the chart of Fig. 6).

For the purpose of the present specification, the concentrations of the flavor components in the tea extract concentrates were evaluated using the peak area $A_{io}$ for $\beta$-ionone, the total $A_{ter}$ of the peak areas of non-$\beta$-ionone terpene compounds and their derivatives, the total $A_{ali}$ of the peak areas of aliphatic alcohols and aliphatic aldehydes, and the total $A_{aro}$ of the peak areas of aromatic alcohols and aromatic aldehydes, as determined from the total ion chromatogram chart as explained above.

<Concentration of tea extract concentrate>

The concentration ratios of the flavor components in the tea extract concentrates as explained above were basically maintained as the concentration ratios of the flavor components in the tea extracts before concentration. Tea extract concentrates with their flavor component concentration ratios maintained from before concentration are unknown in the prior art.

A tea extract concentrate of the invention has a Brix value of 7.5 or greater as measured with a Brix meter. The Brix value of the tea extract before concentration is generally from about 1 to 5. Therefore, the concentration rate of a tea concentrate with a Brix value of 7.5 corresponds to approximately 1.5- to approximately 7.5-fold concentration.

According to the invention, the concentration ratio flavor components in a tea extract before concentration is essentially maintained, even when the concentration rate is high with a Brix value of 7.5 or greater as measured with a Brix meter. A tea extract concentrate of the invention has its concentration ratio of flavor components in the tea extract maintained from before concentration, even with concentration to a high degree with a Brix value of 10.0 or greater, 12.5 or greater or 15.0 or greater. The upper limit for the Brix value of a tea extract concentrate of the invention is not particularly restricted, but examples are numerical values of 200 or lower, 150 or lower, 100 or lower or 75 or lower.

EXAMPLES

The present invention will now be explained in greater detail by examples. However, it is to be understood that the invention is not limited by these examples.

(Fabrication of forward osmosis unit A with forward osmosis membrane (o))

Polyethersulfone (trade name, "Ultrason" by BASF) was dissolved in N-methyl-2-pyrrolidone (Wako Pure Chemical Industries, Ltd.) to prepare a 20 mass% hollow fiber spinning stock solution. The stock solution was filled into a wet hollow fiber spinning machine equipped with a dual spinneret and extruded into a water-filled coagulation tank, causing phase separation to form a hollow fiber. The obtained hollow fiber was wound up onto a winder. The outer diameter of the obtained hollow fiber was 1.0 mm, the inner diameter was 0.7 mm and the diameters of the micropores in the inner surface were 0.05 $\mu$m. The hollow fiber was used as a support layer.

After packing 130 of such hollow fiber support layers into a cylindrical plastic housing with a diameter of 2 cm and a length of 10 cm, both ends were anchored with an adhesive to fabricate a hollow fiber support layer module having an effective membrane inner surface area of 0.023 m$^2$.

After placing 10 g of *m*-phenylenediamine and 0.8 g of sodium lauryl sulfate into a 0.5 L container, 489.2 g of purified water was added to dissolve it, preparing 0.5 kg of a first solution to be used for interfacial polymerization.

Next, 0.8 g of trimesic acid chloride was placed in a separate 0.5 L container, and 399.2 g of *n*-hexane was added to dissolution to prepare 0.4 kg of a second solution to be used for interfacial polymerization.

The first solution was filled into the core side of the previously produced hollow fiber support layer module (the inside of the hollow fiber), and after standing for 30 minutes, the liquid was removed to form a thin liquid film of the first solution on the inside of the hollow fiber. The second solution was then conveyed to the core side for 3 minutes at a flow rate of 0.15 L/min, for interfacial polymerization. The polymerization temperature was set to 25°C.

Next, nitrogen at 50°C was flowed for 30 minutes to the core side of the hollow fiber support layer module to vaporize off and remove the *n*-hexane. Both the shell side and core side were then rinsed with purified water to fabricate forward osmosis unit A as a hollow-fiber forward osmosis membrane (o) module having a polyamide separation active layer on the inner surface of the hollow fiber support layer.

The flux of unit A for water, measured using purified water as the treatment solution and 3.5 mass% brine as the induction solution, was 10.12 kg/(m$^2$ × hr).

(Fabrication of membrane distillation unit B comprising porous membrane (p))

A Henschel mixer was used to mix 23 parts by mass of hydrophobic silica (AEROSIL-R972 by Nippon Aerosil Co., Ltd.) having a mean primary particle size of 0.016 $\mu$m and an area-to-weight ratio of 110 m$^2$/g, 31 parts by mass of dioctyl phthalate (DOP) and 6 parts by mass of dibutyl phthalate (DBP), and then 40 parts by mass of polyvinylidene fluoride ("Solef6010" by SOLVAY) with a weight-average molecular weight of 310,000 was added, and mixing was resumed with the Henschel mixer to obtain a mixture. The mixture was further mixed with a twin-screw kneading extruder to obtain pellets.

The obtained pellets were melt kneaded with a twin-screw kneading extruder at 240°C and extruded into a hollow fiber form to obtain a hollow fiber. A hollow fiber-forming spinneret was fitted onto the outlet inside the extruder tip head, and the kneaded melt was extruded from the melt extrusion hole while simultaneously discharging nitrogen gas from the discharge hole for the hollow section-forming fluid situated on the inside of the melt extrusion hole, thus extruding it into a hollow fiber form.

The hollow fiber material was introduced into a water bath (40°C) with a run distance of 20 cm, and wound up at a speed of 20 m/min.

The obtained hollow fiber material was continuously taken up with a pair of first endless track belt take-up machines at a speed of 20 m/min, and passed through a first heating tank (0.8 m length) controlled to a space temperature of 40°C, after which it was taken up with a second endless track belt take-up machine at a speed of 40 m/min, and stretched to a factor of 2.0 in the lengthwise direction. The material was then passed through a second heating tank (0.8 m length) controlled to a space temperature of 80°C, subsequently cooled on the water surface of a cooling water tank at 20°C while periodically folding, and then taken up with a third endless track belt take-up machine at a speed of 30 m/min, and after shrinking (relaxing) the stretched yarn to a factor of 1.5 in the lengthwise direction, it was wound up with a hank (reel) having a circumference of approximately 3 m. The periodic folding on the water surface of the cooling water tank was carried out by continuously inserting the hollow fiber material between a pair of irregular rolls with circumferences of approximately 0.20 m and four protrusions, at a rotational speed of 170 rpm.

The treated hollow fiber material was immersed in methylene chloride for extraction removal of the DOP and DBP, and was dried. After then immersing the hollow fiber material in a 50 mass% ethyl alcohol aqueous solution, it was immersed in a 5 mass% sodium hydroxide aqueous solution at 40°C for 1 hour, for extraction removal of the hydrophobic silica. The material was then rinsed and dried to obtain a hollow fiber membrane. The outer diameter of the obtained hollow fiber was 1.25 mm, the inner diameter was 0.68 mm and the diameters of the micropores in the inner surface were 0.1 $\mu$m. The hollow fiber was used as a porous membrane.

After packing 70 porous membranes each composed of such a hollow fiber into a cylindrical plastic housing with a diameter of 2 cm and a length of 10 cm, both ends were anchored with an adhesive to fabricate a membrane distillation unit B as a hollow fiber porous membrane (p) module having an effective membrane inner surface area of 0.012 m$^2$.

The flux (permeability) of unit B for water, measured using purified water as the treatment solution and 3.5 mass% brine as the induction solution, was 20.02 kg/(m$^2$ × hr).

<Example 1>

Example 1 was carried out using the system shown in Fig. 2.

Water was used as solvent (b), and magnesium(II) chloride was used as the permeating substance. The magnesium chloride concentration in the permeate flow (d) was 20 mass%.

The forward osmosis unit A fabricated as described above was used as unit A in the first step and the membrane distillation unit B fabricated as described above was used as unit B in the second step.

A coffee extract was used as the solvent-containing material to form the supply flow (a), and it was flowed into the hollow portion of the hollow fiber porous membrane (p) at a supply rate of 10 ml/min. The flow rate of the permeate flow (d) in unit A was 24 ml/min for flow on the outer side of the hollow fiber porous membrane (p). The flow rate of the permeate flow (d) in unit B was 600 ml/min and the pressure in the gas phase unit G of unit B was adjusted to 10 kPa with a vacuum pump.

Extended operation was carried out for 1,000 hours, with the temperature of the permeate flow (d) in unit A in the first step at 25°C, and the temperature of the permeate flow (d) in unit B in the second step at 60°C. The extended operation was 41 cycles with one cycle as 22.5 hours of concentration operation and subsequently 1.5 hours of cleaning of the forward osmosis membrane (o) of unit A (24 hours), and this was followed by 16 hours of concentration operation and completion of the operation.

Cleaning of the forward osmosis membrane (o) of unit A was carried out in the following two stages.

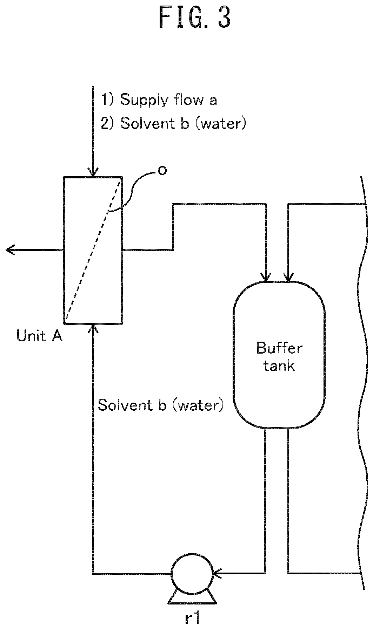

A conceptual drawing of the cleaning step is shown in Fig. 3.

(First stage of cleaning)

After 22.5 hours of the concentration operation, operation was carried out for 30 minutes with the flow of the permeate flow (d) supplied to unit A switched to solvent (b) (water) while maintaining flow of the supply flow (a) to unit A.

(Second stage of cleaning)

Upon completion of the first-stage, flow of the supply flow (a) supplied to unit A was switched to solvent (b) (water) while maintaining flow of the solvent (b) to unit A, and operation was continued for 60 minutes to complete the cleaning.

(Resumption of concentration operation)

Upon completion of the cleaning, the flow supplied to unit A was returned to the conditions before cleaning, and the concentration operation was resumed.

[Evaluation]

A series of evaluations were conducted in the following manner. The evaluation results are shown in Table 1.

(Permeating substance blocking performance)

i) Unit A

When the operation reached a steady state, the amount of cations in the concentrate of the solvent-containing material (the Mg$^{2+}$ ions from the permeating substance, magnesium chloride) was continuously measured using a Model "iCAP Q" ICP-MS by Thermo Fisher Scientific.

The flux of the permeating substance in unit A (the amount of cations moving from the permeate flow (d) through the forward osmosis membrane (o) into the concentrated flow (c) of the solvent-containing material per unit time) was calculated by the following mathematical formula (2).

$$F' = L'/(M \times H) \qquad (2)$$

In this formula, F' is the flux for the permeating substance [g/(m$^2$ × hr)], L' is the amount of permeated cation (g), M is the surface area of the forward osmosis membrane (m$^2$) and H is time (hr).

Table 1 shows the blocking performance of the permeating substance evaluated as follows based on the obtained value of the flux F for the permeating substance.

A: Permeated cation amount below the detection limit, permeating substance flux of 0.
B: Permeating substance flux of greater than 0 and 0.5 g/(m$^2$ × hr) or lower.
C: Permeating substance flux of greater than 0.5 g/(m$^2$ × hr).

ii) Unit B

Upon completion of the operation, the amount of cations in the total amount of separated and recovered solvent (b) (the Mg$^{2+}$ ions from the permeating substance, magnesium chloride) was continuously measured using a Model "iCAP Q" ICP-MS by Thermo Fisher Scientific.

Table 1 shows the blocking performance of the permeating substance evaluated as follows based on the measured amount of cations in solvent (b).

A: Amount of permeated cations of less than 1 ppm.
B: Amount of permeated cations of 1 ppm to 100 ppm.
C: Amount of permeated cations of greater than 100 ppm.

(Recoverability of solvent (b) in unit B)

Table 1 shows the recoverability of solvent (b) in unit B, evaluated as follows.

A: Solvent (b) was obtainable.
C: Solvent (b) was not obtainable.

(Extended operability)

Table 1 shows the extended operability of the concentration system, evaluated as follows.

A: Operation possible for 1,000 hours without problem.
B: Operation possible without problems in a range of 500 hours to less than 1,000 hours.
C: Operation for 500 hours not possible.

<Examples 2 to 20 and Comparative Examples 1 to 5>

A solvent-containing material was concentrated by the same procedure as Example 1, except for changing the type of solvent-containing material, the type of permeating substance and the concentration of the permeate flow (d), the temperature of the permeate flow (d) in unit A, the temperature of the permeate flow (d) in unit B, and the separation process used in unit B, and they were evaluated as described above.

For Example 11, a distillation column was used as unit B instead of a porous membrane (p) module.

The results are shown in Table 1.

[Table 1]

Table 1.

| | | Example 1 | Example 2 | Example 3 | Example 4 | Example 5 | Example 6 | Example 7 | Example 8 |
|---|---|---|---|---|---|---|---|---|---|
| Solvent-containing material | | Coffee extract | Coffee extract | Coffee extract | Coffee extract | Coffee extract | Coffee extract | Coffee extract | Coffee extract |
| Permeate flow | Permeating substance type | $MgCl_2$ | $MgCl_2$ | $MgCl_2$ | $MgCl_2$ | $MgCl_2$ | $CaCl_2$ | $CaSO_4$ | $MgCl_2$ |
| | Permeating substance concentration (mass%) | 25 | 25 | 25 | 25 | 25 | 25 | 25 | 25 |
| Unit A | Permeate flow (d) temperature (°C) | 25 | 15 | 40 | 60 | 5 | 25 | 25 | 25 |
| | Permeating substance blocking performance | A | A | A | B | B | B | B | B |
| Unit B | Permeate flow (d) temperature (°C) | 60 | 60 | 60 | 60 | 60 | 60 | 60 | 60 |
| | Separation process | Membrane distillation | Membrane distillation | Membrane distillation | Membrane distillation | Membrane distillation | Membrane distillation | Membrane distillation | Membrane distillation |
| | Permeating substance blocking performance | A | A | A | A | A | A | A | A |
| Solvent (b) recoverability | | A | A | A | A | A | A | A | A |
| Extended operability | | A | A | A | A | A | B | B | A |

[Table 2]

Table 1. (Continued)

| | | Example 9 | Example 10 | Example 11 | Example 12 | Example 13 | Example 14 | Example 15 | Example 16 |
|---|---|---|---|---|---|---|---|---|---|
| Solvent-containing material | | Coffee extract | Coffee extract | Coffee extract | Milk | Apple juice | Orange juice | Sea tangle soup stock | Green tea extract |
| Permeate flow | Permeating substance type | $MgCl_2$ | $MgCl_2$ | $MgCl_2$ | $MgCl_2$ | $MgCl_2$ | $MgCl_2$ | $MgCl_2$ | $MgCl_2$ |
| | Permeating substance concentration (mass%) | 25 | 25 | 25 | 25 | 25 | 25 | 25 | 25 |
| Unit A | Permeate flow (d) temperature (°C) | 25 | 25 | 25 | 25 | 25 | 25 | 25 | 25 |
| | Permeating substance blocking performance | A | A | A | A | A | A | A | A |
| Unit B | Permeate flow (d) temperature (°C) | 20 | 90 | 60 | 60 | 60 | 60 | 60 | 60 |
| | Separation process | Membrane distillation | Membrane distillation | Distillation | Membrane distillation | Membrane distillation | Membrane distillation | Membrane distillation | Membrane distillation |
| | Permeating substance blocking performance | A | A | B | A | A | A | A | A |
| Solvent (b) recoverability | | A | A | A | A | A | A | A | A |
| Extended operability | | A | A | A | A | A | A | A | A |

[Table 3]

[Table 3]

Table 1. (continued)

| | | Example 17 | Example 18 | Example 19 | Example 20 | Comparative | Comparative Example 2 | Comparative Example 3 | Comparative Example 4 | Comparative Example 5 |
|---|---|---|---|---|---|---|---|---|---|---|
| Solvent-containing material | | Rapeseed oil emulsion | Vanilla essence emulsion | Olive oil emulsion | Aqueous sucrose solution | Milk | Milk | Milk | Milk | Milk |
| Permeate flow | Permeating substance type | $MgCl_2$ | $MgCl_2$ | $MgCl_2$ | $MgCl_2$ | $MgCl_2$ | $MgCl_2$ | NaCl | $MgCl_2$ | $MgCl_2$ |
| | Permeating substance concentration (mass%) | 25 | 25 | 25 | 25 | 25 | 25 | 25 | 25 | 25 |
| Unit A | Permeate flow (d) temperature (°C) | 25 | 25 | 25 | 25 | 4 | 65 | 25 | 25 | 25 |
| | Permeating substance blocking performance | A | A | A | A | C | C | C | A | A |
| Unit B | Permeate flow (d) temperature (°C) | 60 | 60 | 60 | 60 | 60 | 60 | 60 | 45 | 95 |
| | Separation process | Membrane distillation | Membrane distillation | Membrane distillation | Membrane distillation | Membrane distillation | Membrane distillation | Membrane distillation | Membrane distillation | Membrane distillation |
| | Permeating substance blocking performance | A | A | A | A | A | A | A | - | C |
| Solvent (b) recoverability | | A | A | A | A | A | A | A | C | A |
| Extended operability | | A | A | A | A | A | A | B | - | A |

<Example 21>

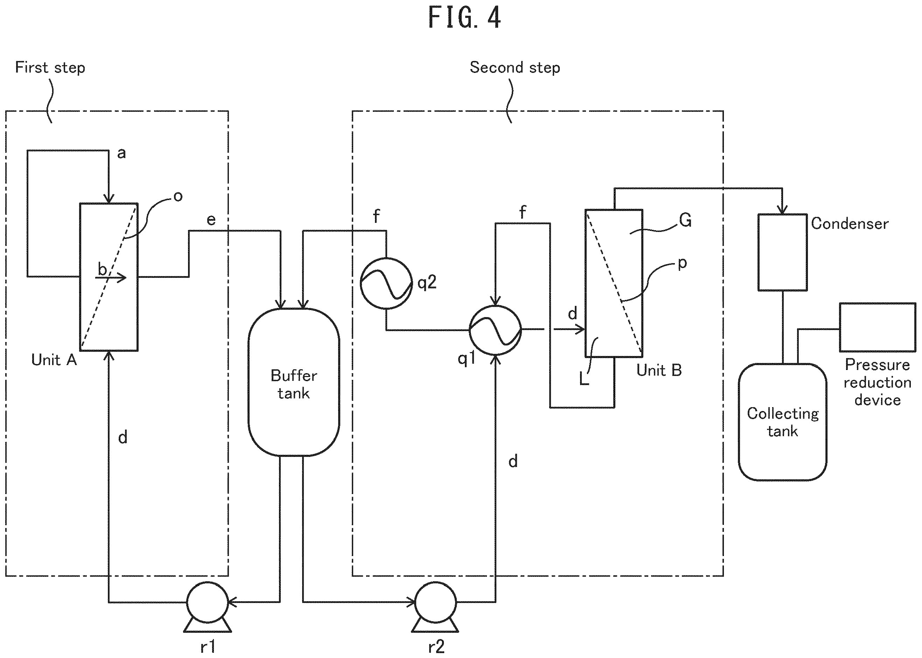

Example 21 was carried out using the system shown in Fig. 4. The system of Fig. 4 is similar to the system shown in Fig. 2, except for providing a circulation supply line that supplied the supply flow (a) discharged from unit A back to unit A.

Water was used as solvent (b), and magnesium(II) chloride was used as the permeating substance. The magnesium chloride concentration in the permeate flow (d) was 20 mass%.

The circulation supply line was attached to the forward osmosis unit A fabricated as described above for use as unit A for the first step. Membrane distillation unit B fabricated as described above was used as unit B for the second step.

A hojicha extract was used as the solvent-containing material to form the supply flow (a), and it was circulated into the hollow portion of the hollow fiber porous membrane (p) at a supply rate of 117 ml/min. The flow rate of the permeate flow (d) in unit A was 472 ml/min for flow on the outside of the hollow fiber porous membrane (p). The flow rate of the permeate flow (d) in unit B was 600 ml/min and the pressure in the gas phase unit G of unit B was adjusted to 10 kPa with a vacuum pump.

Operation was carried out with the temperature of the permeate flow (d) in unit A in the first step at 25°C and the temperature of the permeate flow (d) in unit B in the second step at 60°C, until the hojicha extract was concentrated 10-fold over its supply concentration, thus obtaining a concentrate.

[Evaluation]

(Concentration analysis)

The concentration of the obtained concentrate was measured as the Brix value using a "PAL-S" refractometer by Atago Co., Ltd.

(Flavor component analysis)

The obtained concentrate was supplied to gas chromatography mass spectrometry (GC/MS), and the concentration of each flavor component was obtained as a relative value with respect to the β-ionone concentration, based on the peak area in the total ion chromatogram. Specifically, the following procedure was used.

After pouring 1 mg of the obtained concentrate into a 20 mL screw vial for head space, it was sealed with a septum-equipped screw cap and heated at 80°C for 15 minutes. Next, SPME Fiber (membrane thickness: 65 μm, coating layer: polydimethylsiloxane-divinylbenzene) by SIGMA-ALDRIC was inserted into the vial through the cap septum, trapping the volatile components for 15 minutes at 80°C. The trapped volatile components were introduced into GC/MS through the SPME Fiber for GC/MS analysis. The GC/MS analysis conditions were as follows.

- GC/MS conditions -

GC apparatus: Model "7890A" by Agilent
MS apparatus: Model "JMS Q-1000" by JEOL Corp.
Column: "J&W DB-5" by Agilent Co. (30 m × 0.25 mm I.D. × 0.25 μm liquid phase thickness)
Column heating conditions: 2 minutes at 40°C, followed by temperature increase to 190°C at 10°C/min, and then temperature increase to 250°C at 30°C/min and finally holding for 6 minutes at 250°C.
Carrier gas: Helium
Carrier gas flow rate: 1 mL/min
Inlet temperature: 250°C
Interface temperature: 280°C
Split ratio: splitless
Ion source temperature: 230°C
Ionization method: electron ionization
Ionization voltage: 70 eV
Measuring mass range: 10 to 500

As a result of identifying the GC/MS-detected components using a NIST17 library, the presence of β-ionone, linalool, linalool oxide and geraniol as terpene compounds and their derivatives was confirmed, and the presence of phenylacetaldehyde as an aromatic aldehyde was confirmed.

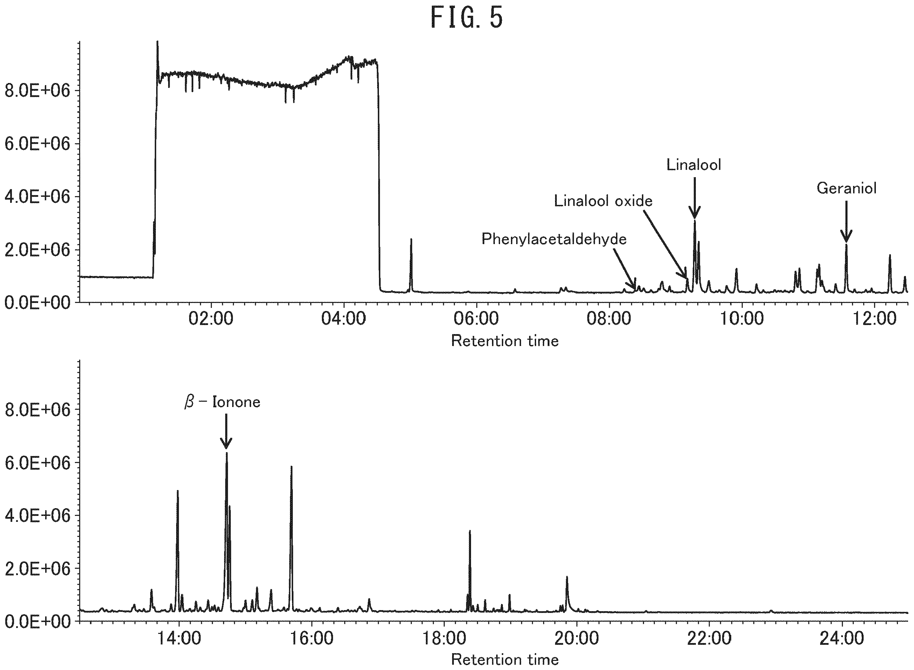

Fig. 5 shows a chart for the obtained total ion chromatogram. The peak areas of each of the components in the total ion chromatogram were calculated by the method illustrated in Fig. 6. The ratios of total $A_{ter}$ of the peak areas for non-$\beta$-ionone terpene compounds and their derivatives, and the peak area $A_{aro}$ for aromatic aldehydes, with respect to the peak area $A_{io}$ for $\beta$-ionone, were determined and are shown in Table 2.

(Organoleptic evaluation for flavor)

Concentrated liquid reduced teas, having their concentrations before concentration adjusted by dilution with purified water, were tasted by 5 panelists who evaluated the flavor on the following scale.

A: All 5 panelists judged the flavor to be strong.
B: 1 to 4 of the panelists judged the flavor to be strong.
C: None of the panelists judged the flavor to be strong.

<Examples 22 and 23>

Concentrates were obtained in the same manner as Example 21 except for changing the concentration rates as listed in Table 2, and they were analyzed as described above.

<Comparative Examples 6 to 9>

Concentrates were obtained in the same manner as Example 21 except for changing the separation process in unit A from forward osmosis to distillation, and changing the concentration rates as listed in Table 2, and they were analyzed as described above.

The evaluation results are summarized in Table 2 below.

The analysis results for the flavor components in the hojicha extracts before concentration are also shown in Table 2.

[Table 4]

Table 2. Concentration of hojicha extract

| | | Hojicha extract before concentra-tion | Example 21 | Example 22 | Example 23 | Comparative Example 6 | Comparative Example 7 | Comparative Example 8 | Comparative Example 9 |
|---|---|---|---|---|---|---|---|---|---|
| Unit A separation process | | - | Forward osmosis | Forward osmosis | Forward osmosis | Distillation | Distillation | Distillation | Distillation |
| Flavor component amount (peak area ratio) | $A_{ter}/A_{io}$ (linalool, linalool oxide, geraniol) | 0.6 | 0.6 | 0.6 | 0.6 | 0.6 | 0.6 | 0.1 | 0.2 |
| | $A_{ali}/A_{io}$ | - | - | - | - | - | - | - | - |
| | $A_{aro}/A_{io}$ (phenyl acetaldehyde) | 0.1 | 0.1 | 0.1 | 0.1 | 0.07 | 0.05 | 0.00 | 0.02 |
| Concentrate concentration (Brix value (%)) | | 3.5 | 17.5 | 10.5 | 35.0 | 5.3 | 7.0 | 17.5 | 10.5 |
| Concentration rate (factor) | | 1.0 | 5.0 | 3.0 | 10 | 1.5 | 2.0 | 5.0 | 3.0 |
| Flavor evaluation | | A | A | A | A | A | B | C | C |

<Examples 24 to 26>

Concentrates were obtained in the same manner as Example 21 except for using green tea extract instead of hojicha extract as the solvent-containing material, and changing the concentration rates as listed in Table 2, and they were analyzed as described above.

As a result of identifying the GC/MS-detected components using a NIST17 library for these examples, the presence of β-ionone, linalool and linalool oxide as terpene compounds and their derivatives was confirmed, the presence of hexanol as an aliphatic alcohol was confirmed, and the presence of phenylacetaldehyde as an aromatic aldehyde was confirmed.

The peak areas for each of the components were calculated from the obtained total ion chromatogram chart, and the ratios of the total $A_{ter}$ of the peak areas of non-β-ionone terpene compounds and their derivatives, the peak area $A_{ali}$ for aliphatic alcohols and the peak area $A_{aro}$ for aromatic aldehydes, were each determined with respect to the peak area $A_{io}$ for β-ionone. and are shown in Table 3.

<Comparative Examples 10 to 14>

Concentrates were obtained in the same manner as Examples 24 to 26 except for changing the separation process in unit A from forward osmosis to distillation, and changing the concentration rates as listed in Table 3, and they were analyzed as described above.

The evaluation results are summarized in Table 3 below.

The analysis results for the flavor components in the green tea extracts before concentration are also shown in Table 3.

[Table 5]

Table 3. Concentration of green tea extract

| | | Green tea extract before concentration | Example 24 | Example 25 | Example 26 | Comparative Example 10 | Comparative Example 11 | Comparative Example 12 | Comparative Example 13 | Comparative Example 14 |
|---|---|---|---|---|---|---|---|---|---|---|
| Unit A separation process | | - | Forward osmosis | Forward osmosis | Forward osmosis | Distillation | Distillation | Distillation | Distillation | Distillation |
| Flavor component amount (peak area ratio) | $A_{ter}/A_{io}$ (linalool, linalool oxide, geraniol) | 1.2 | 1.2 | 1.2 | 1.2 | 0.6 | 1.0 | 0.2 | 0.4 | 0.1 |
| | $A_{ali}/A_{io}$ (hexanol) | 0.05 | 0.05 | 0.05 | 0.05 | 0.03 | 0.04 | 0.01 | 0.02 | 0.01 |
| | $A_{aro}/A_{io}$ (phenyl acetaldehyde) | 0.40 | 0.40 | 0.40 | 0.40 | 0.20 | 0.33 | 0.08 | 0.13 | 0.04 |
| Concentrate concentration (Brix value (%)) | | 5.0 | 25.0 | 15.0 | 50.0 | 10.0 | 6.0 | 25.0 | 15.0 | 50.0 |
| Concentration rate (factor) | | 1.0 | 5.0 | 3.0 | 10 | 2.0 | 1.2 | 5.0 | 3.0 | 10 |
| Flavor evaluation | | A | A | A | A | B | A | C | C | C |

REFERENCE SIGNS LIST

a Supply flow
b Solvent
c Concentrate flow
d Permeate flow
e Flow (e)
f Flow (f)
o Forward osmosis membrane
p Porous membrane
q1 Heat exchanger
q2 Cooling device
r1, r2 Pump
G Gas phase unit
L Liquid phase unit

**Claims**

1. A system for concentrating a solvent-containing material which has a first step in which a supply flow (a) comprising a solvent-containing material that contains a solute and a solvent (b) is caused to flow with a permeate flow (d) by countercurrent flow or cocurrent flow through a forward osmosis membrane (o), causing the solvent (b) in the supply flow (a) to pass through the forward osmosis membrane (o) and move into the permeate flow (d), thereby obtaining a concentrated flow (c) comprising the concentrated solvent-containing material and a flow (e) comprising the diluted permeate flow (d), wherein:

   the permeate flow (d) is an inorganic salt solution containing a multivalent cation, and
   the temperature of the permeate flow (d) in the first step is 5 to 60°C.

2. The system according to claim 1, wherein the solvent (b) is water.

3. The system according to claim 1 or 2, wherein the temperature of the permeate flow (d) is 15 to 40°C.

4. The system according to any one of claims 1 to 3, wherein the forward osmosis membrane (o) is in the form of a hollow fiber.

5. The system according to claim 4, wherein:

   the supply flow (a) is caused to flow into the hollow portion of the hollow-fiber forward osmosis membrane (o), and
   the permeate flow (d) is caused to flow outside of the hollow-fiber forward osmosis membrane (o).

6. The system according to any one of claims 1 to 5, wherein the permeate flow (d) is an inorganic salt solution containing a divalent cation.

7. The system according to any one of claims 1 to 6, wherein the permeate flow (d) is a magnesium chloride solution.

8. The system according to any one of claims 1 to 7, wherein:

   the forward osmosis membrane (o) is a membrane with a support layer and a separation active layer on the support layer,
   the separation active layer is a layer composed mainly of at least one type of substance selected from the group consisting of polyethersulfone, polysulfone, polyvinylidene fluoride, polyacrylonitrile and polyamide, and
   the flux of the forward osmosis membrane (o) for the solvent (b) is 1 to 100 kg/(m$^2$ × hr).

9. A system for concentrating a solvent-containing material which has:

a first step in which a supply flow (a) comprising a solvent-containing material that contains a solute and a solvent (b) is caused to flow with a permeate flow (d) by countercurrent flow or cocurrent flow through a forward osmosis membrane (o), causing the solvent (b) in the supply flow (a) to pass through the forward osmosis membrane (o) and move into the permeate flow (d), thereby obtaining a concentrated flow (c) comprising the concentrated solvent-containing material and a flow (e) comprising the diluted permeate flow (d), and

a second step in which the permeate flow (d) is separated into the solvent (b) and a flow (f) composed of the concentrated permeate flow (d), and

the permeate flow (d) is an inorganic salt solution containing a multivalent cation.

10. The system according to claim 9, wherein the forward osmosis membrane (o) in the first step is in the form of a hollow fiber.

11. The system according to claim 10, wherein in the first step:

the supply flow (a) is caused to flow into the hollow portion of the hollow-fiber forward osmosis membrane (o), and
the permeate flow (d) is caused to flow outside of the hollow-fiber forward osmosis membrane (o).

12. The system according to any one of claims 9 to 11, wherein the second step is carried out by evaporation means.

13. The system according to any one of claims 9 to 12, wherein the temperature of the permeate flow (d) in the second step is 50 to 90°C.

14. The system according to any one of claims 9 to 13, wherein the permeate flow (d) in the first step is an inorganic salt solution containing a divalent cation.

15. The system according to any one of claims 9 to 14, wherein the permeate flow (d) in the first step is a magnesium chloride solution.

16. The system according to any one of claims 9 to 15, wherein:

the second step is based on a membrane distillation process using a porous membrane (p), and
the porous membrane (p) is made of a material that includes a fluorine-based polymer.

17. The system according to claim 16, wherein the separating membrane in the membrane distillation process is a porous membrane having a flux of 1 to 200 $kg/(m^2 \times hr)$ for the solvent (b).

18. The system according to any one of claims 1 to 17, wherein the solvent-containing material is a food.

19. The system according to claim 18, wherein the solvent-containing material is a coffee extract, juice, fruit juice, dairy product, soup stock, tea extract, flavoring emulsion, food oil emulsion or sweetener.

20. A concentrate of a tea extract that includes a component selected from among terpene compounds and their derivatives, wherein:

the terpene compounds include β-ionone,
the ratio $A_{ter}/A_{io}$ is 0.6 to 4.0, where $A_{io}$ is the peak area of β-ionone in the total ion chromatogram for the tea extract concentrate and $A_{ter}$ is the total peak area for terpene compounds other than β-ionone and their derivatives, and
the concentrate has a Brix value of 7.5 or greater as measured with a Brix meter.

21. A concentrate of a tea extract according to claim 20, wherein the ratio $A_{ter}/A_{io}$ is 1.0 to 4.0.

22. The concentrate according to claim 20 or 21, wherein:

the tea extract is green tea extract,
the concentrate includes

at least one compound selected from among aliphatic alcohols and aliphatic aldehydes, and

at least one compound selected from among aromatic alcohols and aromatic aldehydes, and

the ratio $A_{ali}/A_{io}$ is 0.03 to 0.1 and the ratio $A_{aro}/A_{io}$ is 0.2 to 1.0, where $A_{io}$ is the peak area of $\beta$-ionone in the total ion chromatogram for the concentrate, $A_{ali}$ is the total peak area for aliphatic alcohols and aliphatic aldehydes, and $A_{aro}$ is the total peak area for aromatic alcohols and aromatic aldehydes.

23. The concentrate according to claim 22, wherein:

the terpene compounds other than $\beta$-ionone and their derivatives are selected from among linalool and its derivatives,
at least one selected from among the aliphatic alcohols and aliphatic aldehydes is hexanol, and
at least one selected from among the aromatic alcohols and aromatic aldehydes is phenylacetaldehyde.

24. The concentrate according to claim 20 or 21, wherein:

the tea extract is hojicha extract,
the concentrate further includes at least one compound selected from among aromatic alcohols and aromatic aldehydes, and
the ratio $A_{aro}/A_{io}$ is 0.05 to 0.2, where $A_{io}$ is the peak area of $\beta$-ionone in the total ion chromatogram for the concentrate, and $A_{aro}$ is the total peak area for aromatic alcohols and aromatic aldehydes.

25. The concentrate according to claim 24, wherein:

the terpene compounds other than $\beta$-ionone and their derivatives are selected from among linalool and its derivatives, and geraniol, and
at least one selected from among the aromatic alcohols and aromatic aldehydes is phenylacetaldehyde.

# FIG. 1

First step

Unit A

a

o

c

b

e

d

FIG. 2

# FIG. 3

1) Supply flow a
2) Solvent b (water)

O

Unit A

Solvent b (water)

Buffer
tank

r1

FIG. 4

FIG. 5

# FIG. 6

EP 3 714 965 A1

## INTERNATIONAL SEARCH REPORT

| International application No. |
|---|
| PCT/JP2018/042883 |

**A. CLASSIFICATION OF SUBJECT MATTER**

Int.Cl.   B01D61/00(2006.01)i, A23L5/00(2016.01)i, B01D61/36(2006.01)i,
          B01D61/58(2006.01)i, B01D69/08(2006.01)i, B01D71/68(2006.01)i

According to International Patent Classification (IPC) or to both national classification and IPC

**B. FIELDS SEARCHED**

Minimum documentation searched (classification system followed by classification symbols)

Int.Cl.   B01D61/00, A23L5/00, B01D61/36, B01D61/58, B01D69/08, B01D71/68,
          A23F3/00-3/42

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | CN 103073146 A (SHANGHAI CAS ADVANCED RESEARCH INSTITUTE) 01 May 2013, paragraphs [0018], [0072], [0077]-[0086], fig. 1 (Family: none) | 1-3, 6-9, 12-17 |
| Y | | 4-8, 10-25 |
| Y | JP 2013-198893 A (TOYOBO CO., LTD.) 03 October 2013, claim 1 (Family: none) | 4-8, 10-25 |
| Y | JP 57-12802 A (EBARA INFILCO CO., LTD.) 22 January 1982, page 3, lower left column, lines 13-18 (Family: none) | 18-25 |

☒ Further documents are listed in the continuation of Box C.      ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 23 January 2019 (23.01.2019) | 05 February 2019 (05.02.2019) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
|---|
| PCT/JP2018/042883 |

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2016-150308 A (SASAKURA ENGINEERING CO., LTD.) 22 August 2016, paragraph [0009] (Family: none) | 18-25 |
| X | JP 2016-26492 A (MITSUBISHI CHEMICAL CORP.) 18 February 2016, paragraphs [0008], [0024], [0088]-[0113], fig. 1 (Family: none) | 20-25 |
| X | JP 2005-40030 A (KAO CORP.) 17 February 2005, paragraphs [0001], [0008]-[0012] (Family: none) | 20-25 |
| X | JP 5-49840 A (HITACHI ZOSEN CORP.) 02 March 1993, paragraphs [0009]-[0025] (Family: none) | 20-25 |
| A | WO 2016/027865 A1 (ASAHI KASEI CORPORATION) 25 February 2016 & US 2017/0259210 A1 | 1-25 |
| A | JP 2011-525147 A (YALE UNIVERSITY) 15 September 2011 & US 2012/0228222 A1 & WO 2009/155596 A2 & EP 2303436 A2 & KR 10-2011-0028363 A & CN 102123782 A | 1-25 |
| A | WO 2011/126003 A1 (SUNTORY BEVERAGE & FOOD LIMITED) 13 October 2011 & CN 102933088 A & TW 201201703 A | 20-25 |
| A | WO 2011/126005 A1 (SUNTORY BEVERAGE & FOOD LIMITED) 13 October 2011 & CN 102933087 A & TW 201201704 A | 20-25 |

Form PCT/ISA/210 (continuation of second sheet) (January 2015)

## INTERNATIONAL SEARCH REPORT

| International application No. |
| --- |
| PCT/JP2018/042883 |

**Box No. II        Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III        Observations where unity of invention is lacking (Continuation of item 3 of first sheet)**

This International Searching Authority found multiple inventions in this international application, as follows:
See extra sheet

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**        ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (January 2015)

**INTERNATIONAL SEARCH REPORT**

International application No.

PCT/JP2018/042883

Document 1: CN 103073146 A (SHANGHAI CAS ADVANCED RESEARCH INSTITUTE) 01 May 2013, paragraphs [0018], [0072], [0077]-[0086], fig. 1 (Family: none)

(Invention 1) Claims 1-19
　　　Claims 1-3 lack novelty in light of document 1, and thus do not have a special technical feature.
　　　However, claims 4-19 have a special technical feature or have an inventive relationship with claim 1, and are thus classified as invention 1.

(Invention 2) Claims 20-25
　　　Claims 20-25 are not considered to share identical or corresponding special technical features with any of the claims classified as invention 1. Furthermore, claims 20-25 are not dependent on claim 1 and are not substantially identical or equivalent to any of the claims classified as invention 1.
　　　Therefore, claims 20-25 are classified as invention 2.

Form PCT/ISA/210 (extra sheet) (January 2015)

**EP 3 714 965 A1**

**REFERENCES CITED IN THE DESCRIPTION**

**Patent documents cited in the description**

- US 20050145568
- JP 2011083663 A
- JP 2017113675 A